# EUROPEAN PATENT SPECIFICATION

(11) **EP 0 569 513 B1**
(45) Date of publication and mention of the grant of the patent: **12.11.1997**
(21) Application number: 92905776.8
(22) Date of filing: 31.01.1992
(51) Int. Cl.: C05B 17/02, C05C 5/04, C05D 9/02, C05G 1/00

(54) **IMPROVED SOLUBILITY COMPOUND FERTILIZER COMPOSITIONS**
Lösliche Düngemittelzusammenstellungen
COMPOSITIONS POUR ENGRAIS SOUS FORME DE COMPOSES SOLIDES A SOLUBILITE ACCRUE

(30) Priority: 31.01.1991 US 648644
(43) Date of publication of application: 18.11.1993
(60) Divisional application: 97200001.2
(73) Proprietor: OMS INVESTMENTS, Inc., Wilmington, Delaware 19801 (US)
(72) Inventor: VETANOVETZ, Richard, P., Emmaus, PA 18049 (US); PETERS, Robert, Allentown, PA 18104 (US)
(74) Representative: De Hoop, Eric
(86) International application number: US9200850
(87) International publication number: WO9213813

(56) References cited:
- GB-A- 2 072 644
- Chemical Abstracts, volume 93, no. 11, 15 September 1980, (Columbus, Ohio, US) see page 622, abstract 113193d, & PI 7908335 (ULTRAFERTIL S.A.) 04-03-1980

## Description

### Background of the Invention

### Field of the Invention

This invention concerns improved solid fertilizer compositions and in particular solid fertilizer compositions useful for preparing aqueous fertilizer solutions for precision plant nutrition.

### Prior Art

In greenhouses, nurseries and other intensive horticulture environments, best results are attained when macro- and micronutrients are carefully delivered to the growing plants. Many growers choose to utilize compound high analysis water-soluble fertilizers. Typically, these fertilizers are marketed as solids which are dissolved to prepare concentrated stock solutions which are then diluted into irrigation water by means of proportioners or injection devices.

The Grace Sierra Horticultural Products Company markets a wide range of water-soluble solid compound fertilizer formulations under the Peters Professional® trademark. These formulations are designed to dissolve quickly and completely with no precipitation. It is also desired that a fertilizer formulation have good long-term stability as a stock solution so as not to form precipitates which can clog proportioners and irrigation lines. This has led to a limitation with water-soluble fertilizer formulation available heretofore. Calcium is an important nutrient which is called for in many plant nutrition formulations, but calcium salts cannot be used together with the conventional phosphorous sources--monoammonium phosphate and diammonium phosphate--as the pHs which these phosphate sources provide are too high (not acidic enough) to give adequate solubility to the calcium ions and thus give rise to precipitation of the calcium salts in the stock solution and in the proportioners.

Potassium phosphate or sodium phosphate can be used as soluble phosphorous sources but these are either expensive or not conducive to plant growth. Phosphoric acid can be used but is a liquid and hazardous to handle. Therefore, a grower wishing to fertilize with both calcium and phosphorous, without resorting to the use of an alkali metal phosphate or liquid phosphorous acid, will need to inject these two elements separately.

Secondly, and similarly, the use of chelated trace nutrients (micronutrients) has been widely postulated in order to keep these trace nutrients in solution in stock solutions which also contain the monoammonium and diammonium phosphates. If nonchelated micronutrients (such as simple nitrates or sulfates) are employed with the conventional phosphorous sources, the micronutrients tend to precipitate from solution. Again, these chelated micronutrients increase the cost of the fertilizer formulations.

The present invention employs urea phosphate in water-soluble solid fertilizer formulations. Urea phosphate is a known material. The text, Urea and Urea Phosphate Fertilizers by Clifford W. Fowler (Noyes Data Corporation, Park Ridge, New Jersey, 1976) at page 23, shows a process for preparing this material and suggests that it may be used as a fertilizer. Similarly, United States Patent No. 4,456,463 discloses the use of urea-phosphoric acid reaction products as ammonia-stabilized liquid components of fertilizers. Chemical Abstracts 106 (3) 101311q shows a liquid component for use in fertilizers which contains a urea phosphate polycondensation product. Chemical Abstracts 102 (9)77486v also shows this. Other references of interest include Chemical Abstracts 101 (23) 209498s which concerns the biological fate of urea/phosphate fertilizers; Chemical Abstracts 101 (21) 19398k which discusses the use of urea phosphate fertilizers; Chemical Abstracts 88 (19)35558a which describes the reaction of phosphoric acid with urea and with calcium salts; and Chemical Abstracts 86 (11)70783 g which deals with the development of liquid multicomponent fertilizers based on potassium and ammonium nitrates and diphosphates, urea, water and trace elements.

GB-A-2 072 644 discloses a process for the preparation of a nitrogenous fertilizer which comprises adding, whilst heating, urea phosphate to a fertilizer feedstock comprising calcium nitrate. Said process is in practice carried out at a temperature of from 100 to 130°C. By the heating treatment polymerized urea phosphate is formed.

### Statement of the Invention

An improved solid fertilizer which dissolves completely in water to give a phosphorous-containing stock solution has now been found. This invention provides a solid complex fertilizer for dissolving in water to give a water-based phosphorous and calcium containing stock solution, characterized in that the solid complex fertilizer comprises a physical mixture of 5 to 95% by weight of urea phosphate as the principal phosphorous source and 5 to 95 % by weight of a simple salt of calcium, and the stock solution obtained by dissolving the fertilizer in water is precipitate-free.

In addition, this invention provides a water-based precipitate-free fertilizer concentrate comprising the solid complex fertilizer dissolved in water.

Preferably, the concentration of the solid complex fertilizer in the concentrate is from about 2% to about 40% by weight of the solution, more preferably from about 5% to about 35% by weight of the solution.

In addition, this invention provides a method for preparing a stable water-based phosphorous-containing and calcium-containing fertilizer aqueous stock solution. This method involves
obtaining a solid compound fertilizer admixture of urea phosphate as a primary phosphorous component and a simple salt of calcium, and
mixing this admixture with water at a ratio predetermined to yield a concentration of the admixture of 2 to 40% by weight and allowing the admixture to dissolve completely.

The solid complex fertilizer of the invention may additionally contain at least one nonchelated micronutrient trace metal salt, such as a nitrate or sulfate salt of iron, manganese, copper, boron, zinc and molybdenum.

In addition, the solid complex fertilizer may contain magnesium, preferably in the form of magnesium nitrate.

The inclusion of urea phosphate in a dry blended mixture of nutrient sources which include calcium, and optionally magnesium and/or trace metals in nonchelated forms such as nitrates and/or sulfates offers several advantages. For one, the urea phosphate establishes a low pH condition when the blended mixture is added to water to make a concentrated stock solution. A stock solution pH in the range of 0 to 2 may be achieved. This low solution pH maintains solubility and clarity of the concentrated stock solution. Urea phosphate, by the effect it has on solution pH, prevents the formation of calcium phosphate, magnesium phosphate and iron phosphate, which are not soluble. Similarly, the low pH helps prevent calcium from precipitating in the presence of sulfate ions which may be present. Therefore, when urea phosphate is used as a primary phosphorous source, it will make possible the inclusion of phosphorous and a metal such as calcium, magnesium or iron in one compound fertilizer, without the use of chelates or the disadvantage of a precipitate forming. This allows the end user to prepare and apply a complete nutrient solution using one stock solution and utilizing one injector. It also makes possible the inclusion of nonchelated trace nutrients into phosphorous-containing nutrient solutions without precipitation. It also allows the fertilizer solution to have an increased acidifying effect on the growing medium if needed. In summary, the advantages of using urea phosphate as a primary phosphate source in a solid compound fertilizer are:
a. The ability to purchase, prepare and apply a complete nutrient solution with one stock solution and one proportioner.
b. The ability to use nonchelated micronutrient trace elements without reduction in solubility in the stock solution as is observed using conventional dry phosphorus sources.
c. The ability to formulate acidic fertilizers that are sold as dry solids and thus are less hazardous to the end user than liquid phosphoric acid-based materials.

### DETAILED DESCRIPTION OF THE INVENTION

The fertilizer compositions of this invention are dry solid materials. This is defined to mean that they are particulate flowing solids having a water content of less than about 10% by weight total composition.

The fertilizer compositions of this invention contain urea phosphate 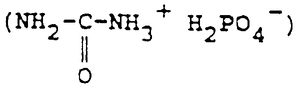 as a dry particulate solid. The amount of urea phosphate will vary depending upon the nitrogen and phosphorous analysis desired for the formulated composition. Typically, the urea phosphate is used in place of monoammonium phosphate or diammonium phosphate. Since urea phosphate contributes nitrogen as well as phosphorous in a precise stoichiometric ratio to the dry fertilizer mix, it may be necessary to add additional phosphorus sources or nitrates or urea as additional nitrogen sources to alter the ratio provided by urea phosphate alone. A solid product of the invention will contain at least about 5% by weight (total solids) of urea phosphate which by itself will contribute about 2.5%w phosphorous, (calculated as P₂O₅) and about 1%w nitrogen as N. The solid product can contain up to about 95% by weight of urea phosphate which would by itself contribute about 43%w phosphorous as P₂O₅ and abcut 17%w nitrogen as N. Higher P or N assays can be achieved by the addition of phosphorus sources or various nitrogen sources, such as urea or ammonium nitrate. The range of materials falling within the scope of this invention have phosphorous contents (as %w P₂O₅) of from about 2.5% to 44%, nitrogen contents (as %w N) of from 1% to 40% and potassium contents (as %w K₂O) of from 0% to 35%. Within these formulation ranges and parameters, it is desirable for the urea phosphate to be the primary or principal source of phosphorous in the present solid fertilizers. By "primary" or "principal" source is meant that urea phosphate contributes at least about 50% and preferably at least about 95% and especially essentially 100% of the phosphorous present in these products. In cases where urea phosphate is not the sole phosphorus source, other phosphates such as potassium phosphate and ammonium phosphate can make up the balance.

As mentioned above the solid complex fertilizer comprises, in addition to urea phosphate, 5 to 95% by weight of a simple salt of calcium, especially a nitrate or sulfate salt.

Further, the solid complex fertilizer of the invention may contain at least one nonchelated micronutrient trace metal, such as magnesium, iron, manganese, copper, boron, zinc or molybdenum. Ranges of concentration for these materials are as follows:

| Nutrient | Concentration Range as Elemental Nutrient in Final Dry Product, % |
|---|---|
| Mg | 0-5.0 |
| Fe | 0-1.0 |
| Mn | 0-1.0 |
| Cu | 0-0.5 |
| B | 0-0.5 |
| Zn | 0-1.0 |
| Mo | 0-0.2 |

Importantly, these materials are not provided as chelates, such as EDTA chelates or the like, but rather as simple salts, especially nitrates or sulfates. In the case of boron, it may be supplied as boric acid. Molybdenum may be provided as an alkali metal or ammonium molybdate. Magnesium, although often present in higher concentration than typically associated with "trace metals" can be present as magnesium nitrate. This means that the following representative materials may be used in the products with minimal concern about precipitation or the like: magnesium nitrate, ferrous sulfate, ferrous nitrate, manganese sulfate, manganese nitrate, cupric sulfate, cupric nitrate, boric acid, zinc sulfate, zinc nitrate, sodium molybdate, ammonium molybdate and the like. In addition, the solid products can contain additional materials such as cofactors if desired.

These materials are mixed as solids, often with minor amounts of water as hydration and the like being present to allow a homogenous product to be formed. The resulting products are dry solids as that term has been defined herein. They can be sold in bulk or they can be premeasured into units suitable for forming a standard volume of stock solution. In either case, it is often of advantage to distribute the materials in water-resistant packaging to minimize caking and lumping. Similarly, it may be of advantage to include soluble inerts which are dyes, or which promote dispersion, prevent caking, or the like.

The solid products of this invention are made up into stock solutions by dissolving in water. This should be carried out in clean equipment usually with some agitation. Commonly, the stock solution contains from about 0.5 to about 5 lbs/gallon of dissolved solid (that is, from about 2% to about 40% by weight of dissolved solid). Preferably, the stock solution contains from about 5% to about 35% by weight of dissolved solid. This stock solution material is diluted by a factor of from 10 to 200 for application to the plants. This gives final concentrations which, for nitrogen, range from about 25 ppm up to about 450 ppm, with the other nutrients scaled accordingly.

The materials of this invention will be further described with reference to the following examples. These are provided to illustrate the practice of the invention and not to limit its scope which is defined by the appended claims.

### EXAMPLES

Eight pairs of typical stock solutions were prepared using various combinations of nutrient sources, and the results differed depending on the source of phosphate. The nutrient sources included materials which are commonly used in the manufacture of water-soluble fertilizers. The most widely used source of phosphorous is monoammonium phosphate (MAP) which was compared with urea phosphate (UP) to determine differences in their effects on maintaining the solubility of all components of various compound fertilizer mixtures. In each pair, one was based on UP and the other on MAP. Some precipitates occurred in the MAP-based materials within the first 24 hours and after 30 days, the data in Table 1 were assembled.

### Conclusion

These results show that the use of monoammonium phosphate (MAP) in mixtures with calcium nitrate, magnesium nitrate, ferrous sulfate, manganese sulfate, copper sulfate and zinc sulfate does not maintain the solubility of these components in solution. This is in contrast to the use of urea phosphate (UP) which does maintain the solubility of these in solution consisting of these water soluble nutrient sources. These data show that the use of UP will permit calcium nitrate, magnesium nitrate and/or metal sulfates to be present in clear, concentrated stock solutions. This is a result that MAP, as a phosphorus source, is incapable of providing.

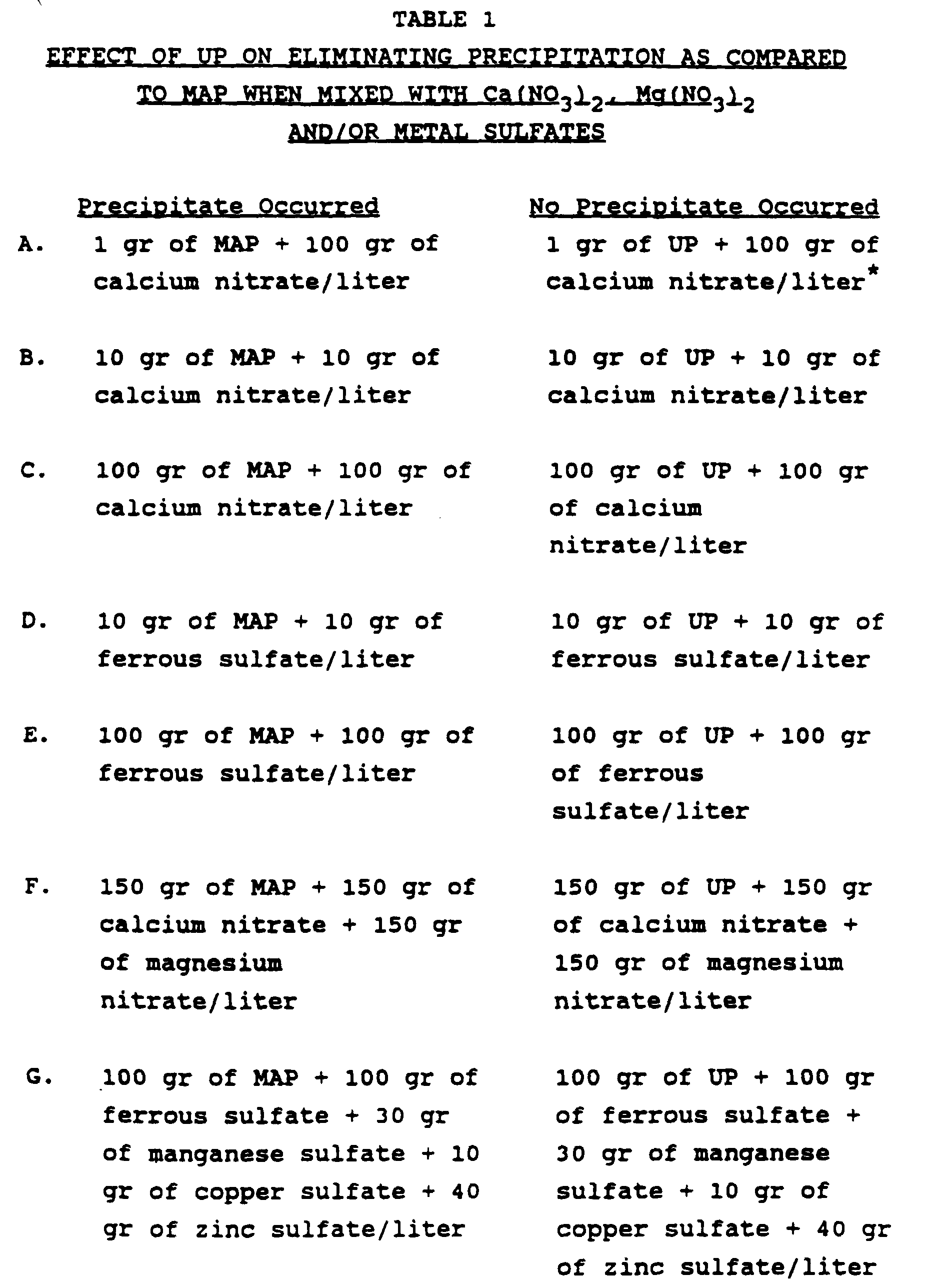

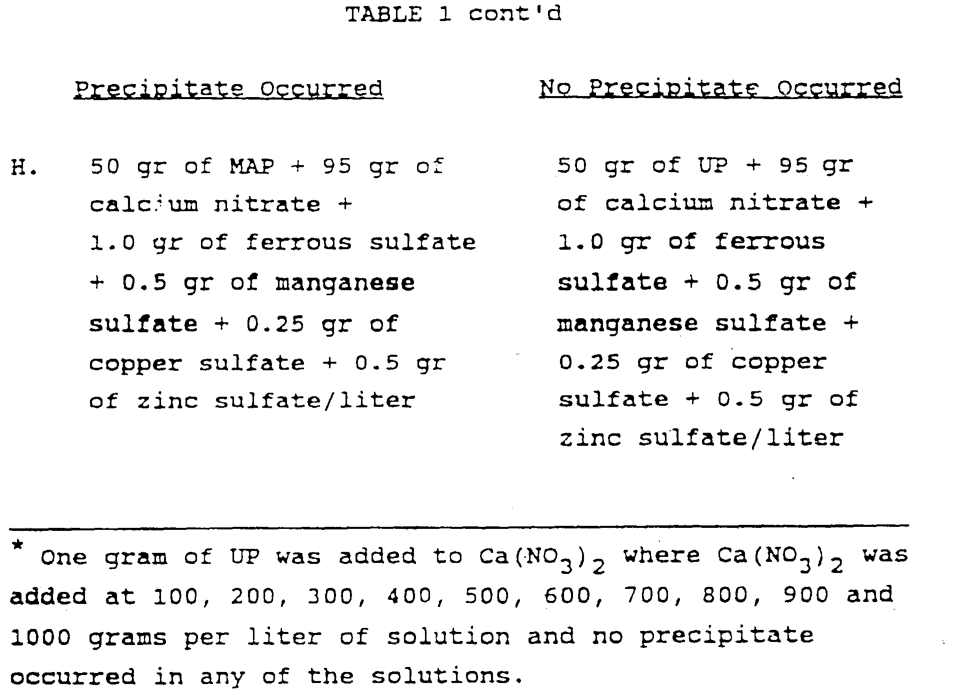

Theses results show that one can provide solid compound fertilizers which can be successfully formed into stable stock solutions having weight compositions as follows:

| A. Calcium/phosphorous compound fertilizer | | |
|---|---|---|
| Calcium Nitrate | | 5 to 95% |
| Urea Phosphate | | 5 to 95% |
| Other Fertilizer Materials | | 0 to 75% |

| B. Calcium/phosphorous/micronutrient compound fertilizer | | |
|---|---|---|
| Calcium Nitrate | | 5 to 94% |
| Urea Phosphate | | 5 to 94% |
| Trace Metal Sulfates and Nitrates including | FeSO₄ | 0.1 to 50% (preferably 1 to 40 %, and especially 2 to 40%) |
| | MnSO₄ | |
| | ZnSO₄ | |
| | CuSO₄ | |
| Other fertilizer materials including magnesium nitrate | | 0 to 75% |

## Claims (Claims for the following Contracting State(s): AT, BE, CH, LI, DE, DK, FR, GB, GR, IT, LU, MC, NL, SE)

1. A solid complex fertilizer for dissolving in water to give a water-based phosphorous and calcium containing stock solution, **characterized in that** the solid complex fertilizer comprises a physical mixture of
5 to 95% by weight of urea phosphate as the principal phosphorous source and
5 to 95% by weight of a simple salt of calcium,
and the stock solution obtained by dissolving the fertilizer in water is precipitate-free.

2. The solid complex fertiliser of claim 1, additionally containing at least one nonchelated micro nutrient trace metal salt,

3. The solid complex fertiliser of claim 2, wherein the nonchelated trace metal salt is present in an amount up to 50% by weight of the total complex fertiliser.

4. The solid complex fertiliser of any preceding claim, comprising
5 to 94% by weight of urea phosphate,
5 to 94'% by weight of calcium nitrate, and
0.1% to 50% by weight of nonchelated micro nutrient trace metal salt.

5. The solid complex fertiliser of claim 2, 3, 4, wherein the nonchelated micro nutrient trace metal salt comprises a sulfate or nitrate of iron, copper, manganese or zinc.

6. The solid complex fertiliser of Claim 4 or 5, additionally comprising magnesium nitrate.

7. A water-based precipitate-free fertiliser concentrate comprising the solid complex fertiliser of any preceding claim dissolved in water.

8. A water-based precipitate-free fertiliser concentrate according to claim 7, in which the solid complex fertiliser is from about 2% to about 40% by weight of the solution.

9. A water-based precipitate-free fertiliser concentrate according to claim 8, in which the solid complex fertiliser is from about 5% to about 35% by weight of the solution.

## Claims (Claims for the following Contracting State(s): ES)

1. A solid complex fertilizer for dissolving in water to give a water-based phosphorous and calcium containing stock solution, **characterized in that** the solid complex fertilizer comprises a physical mixture of
5 to 95% by weight of urea phosphate as the principal phosphorous source and
5 to 95% by weight of a simple salt of calcium,
and the stock solution obtained by dissolving the fertilizer in water is precipitate-free.

2. The solid complex fertiliser of claim 1, additionally containing at least one nonchelated micro nutrient trace metal salt,

3. The solid complex ferti!iser of claim 2, wherein the nonchelated trace metal salt is present in an amount up to 50% by weight of the total complex fertiliser.

4. The solid complex fertiliser of any preceding claim, comprising
5 to 94% by weight of urea phosphate,
5 to 94'% by weight of calcium nitrate, and
0.1% to 50% by weight of nonchelated micro nutrient trace metal salt.

5. The solid complex fertiliser of claim 2, 3, 4, wherein the nonchelated micro nutrient trace metal salt comprises a sulfate or nitrate of iron, copper, manganese or zinc.

6. The solid complex fertiliser of Claim 4 or 5, additionally comprising magnesium nitrate.

7. A water-based precipitate-free fertiliser concentrate comprising the solid complex fertiliser of any preceding claim dissolved in water.

8. A water-based precipitate-free fertiliser concentrate according to claim 7, in which the solid complex fertiliser is from about 2% to about 40% by weight of the solution.

9. A water-based precipitate-free fertiliser concentrate according to claim 8, in which the solid complex fertiliser is from about 5% to about 35% by weight of the solution.

10. A method for preparing a solid complex fertilizer for dissolving in water to give a water-based phosphorous and calcium containing stock solution, characterized in that it comprises physically mixing
5 to 95% by weight of urea phosphate as the principal phosphorous source and
5 to 95% by weight of a simple salt of calcium, and in that the stock solution obtained by dissolving the fertilizer in water is precipitate-free.

## Patentansprüche (Patentansprüche für folgende(n) Vertragsstaat(en): AT, BE, CH, LI, DE, DK, FR, GB, GR, IT, LU, MC, NL, SE)

1. Festes komplexes Düngemittel zur Lösung in Wasser zum Erhalten einer Phosphor und Calcium enthaltenden wässrigen Werkstoff lösung, **dadurch gekennzeichnet, dass** das feste komplexe Düngemittel eine physikalische Mischung von
5 bis 95 Gew.% von Harnstoffphosphat als die Hauptphosphorquelle und
5 bis 95 Gew.% eines einfachen Calciumsalzes enthält, und dass die durch das Lösen des Düngemittels in Wasser erhaltene Werkstoff lösung niederschlagfrei ist.

2. Festes komplexes Düngemittel gemäss Anspruch 1, das zusätzlich mindestens ein nicht-cheliertes Mikronährstoff Spurenmetallsalz enthält.

3. Festes komplexes Düngemittel gemäss Anspruch 2, wobei das nicht-chelierte Spurenmetallsalz in einer Menge bis zum 50 Gew.% des totalen komplexen Düngemittels vorhanden ist.

4. Festes komplexes Düngemittel gemäss irgendeinem der vorhergehenden Ansprüche, das
5 bis 94 Gew.% von Harnstoffphosphat,
5 bis 94 Gew.% von Calciumnitrat, und
0,1 bis 50 Gew.% des nicht-chelierten Mikronährstoff Spurenmetallsalzes
enthält.

5. Festes komplexes Düngemittel gemäss Ansprüche 2, 3, 4, wobei das nicht-chelierte Mikronährstoff Spurenmetallsalz ein Sulphat oder Nitrat aus Eisen, Kupfer, Mangan oder Zink enthält.

6. Festes komplexes Düngemittel gemäss Anspruch 4 oder 5, das zusätzlich Magnesiumnitrat enthält.

7. Wässriges, niederschlagfreies Düngemittelkonzentrat, das wassergelöstes festes komplexes Düngemittel gemäss einem der vorhergehenden Ansprüche enthält.

8. Wässriges, niederschlagfreies Düngemittelkonzentrat gemäss Anspruch 7, wobei das feste komplexe Düngemittel von etwa 2 Gew.% bis etwa 40 Gew.% der Lösung ist.

9. Wässriges, niederlschlagfreies Düngemittelkonzentrat gemäss Anspruch 8, wobei das feste komplexe Düngemittel von etwa 5 Gew.% bis etwa 35 Gew.% der Lösung ist.

## Patentansprüche (Patentansprüche für folgende(n) Vertragsstaat(en): ES)

1. Festes komplexes Düngemittel zur Lösung in Wasser zum Erhalten einer Phosphor und Calcium enthaltenden wässrigen Werkstofflösung, **dadurch gekennzeichnet, dass** das feste komplexe Düngemittel eine physikalische Mischung von
5 bis 95 Gew.% von Harnstoffphosphat als die Hauptphosphorquelle und
5 bis 95 Gew.% eines einfachen Calciumsalzes enthält, und dass die durch das Lösen des Düngemittels in Wasser erhaltene Werkstoff lösung niederschlagfrei ist.

2. Festes komplexes Düngemittel gemäss Anspruch 1, das zusätzlich mindestens ein nicht-cheliertes Mikronährstoff Spurenmetallsalz enthält.

3. Festes komplexes Düngemittel gemäss Anspruch 2, wobei das nicht-chelierte Spurenmetallsalz in einer Menge bis zum 50 Gew.% des totalen komplexen Düngemittels vorhanden ist.

4. Festes komplexes Düngemittel gemäss irgendeinem der vorhergehenden Ansprüche, das
5 bis 94 Gew.% von Harnstoffphosphat,
5 bis 94 Gew.% von Calciumnitrat, und
0,1 bis 50 Gew.% des nicht-chelierten Mikronährstoff Spurenmetallsalzes
enthält.

5. Festes komplexes Düngemittel gemäss Ansprüche 2, 3, 4, wobei das nicht-chelierte Mikronährstoff Spurenmetallsalz ein Sulphat oder Nitrat aus Eisen, Kupfer, Mangan oder Zink enthält.

6. Festes komplexes Düngemittel gemäss Anspruch 4 oder 5, das zusätzlich Magnesiumnitrat enthält.

7. Wässriges, niederschlagfreies Düngemittelkonzentrat, das wassergelöstes festes komplexes Düngemittel gemäss einem der vorhergehenden Ansprüche enthält.

8. Wässriges, niederschlagfreies Düngemittelkonzentrat gemäss Anspruch 7, wobei das feste komplexe Düngemittel von etwa 2 Gew.% bis etwa 40 Gew.% der Lösung ist.

9. Wässriges, niederlschlagfreies Düngemittelkonzentrat gemäss Anspruch 8, wobei das feste komplexe Düngemittel von etwa 5 Gew.% bis etwa 35 Gew.% der Lösung ist.

10. Verfahren zur Herstellung eines festen komplexen Düngemittels zur Lösung in Wasser zum Erhalten einer Phosphor und Calcium enthaltenden Werkstoff lösung, **dadurch gekennzeichnet,** dass das Verfahren das physikalische Mischen von
5 bis 95 Gew.% von Harnstoffphosphat als die Hauptphosphorquelle und
5 bis 95 Gew.% eines einfachen Calciumsalzes umfasst, und dass die durch das Lösen des Düngemittels in Wasser erhaltene Werkstoff lösung niederschlagfrei ist.

## Revendications (Revendications pour l'(les) Etat(s) contractant(s) suivant(s): AT, BE, CH, LI, DE, DK, FR, GB, GR, IT, LU, MC, NL, SE)

1. Engrais complexe solide à dissoudre dans de l'eau pour donner une solution de réserve à base d'eau contenant du phosphore et du calcium, caractérisé en ce que l'engrais complexe solide comprend un mélange physique
de 5 à 95 % en poids de phosphate d'urée en tant que principale source de phosphore et
de 5 à 95 % en poids d'un sel simple de calcium,
et la solution de réserve obtenue en dissolvant l'engrais dans de l'eau est exempte de précipité.

2. Engrais complexe solide selon la revendication 1, comprenant en plus au moins un sel de métal-trace de micronutriment non chélaté.

3. Engrais complexe solide selon la revendication 2, dans lequel le sel de métal-trace non chélaté est présent en une proportion allant jusqu'à 50 % en poids de l'engrais complexe total.

4. Engrais complexe solide selon l'une quelconque des revendications précédentes, comprenant
5 à 94 % en poids de phosphate d'urée,
5 à 94 % en poids de nitrate de calcium, et
0,1 % à 50 % en poids de sel de métal-trace de micronutriment non chélaté.

5. Engrais complexe solide selon la revendication 2, 3, 4, dans lequel le sel de métal-trace de micronutriment non chélaté comprend un sulfate ou nitrate de fer, de cuivre, de manganèse ou de zinc.

6. Engrais complexe solide selon la revendication 4 ou 5, comprenant en plus du nitrate de magnésium.

7. Concentré d'engrais à base d'eau, exempt de précipité, comprenant l'engrais complexe solide selon l'une quelconque des revendications précédentes, dissous dans de l'eau.

8. Concentré d'engrais à base d'eau exempt de précipité selon la revendication 7, dans lequel l'engrais complexe solide représente d'environ 2 % à environ 40 % en poids de la solution.

9. Concentré d'engrais à base d'eau exempt de précipité selon la revendication 8, dans lequel l'engrais complexe solide représente d'environ 5 % à environ 35 % en poids de la solution.

## Revendications (Revendications pour l'(les) Etat(s) contractant(s) suivant(s): ES)

1. Engrais complexe solide à dissoudre dans de l'eau pour donner une solution de réserve à base d'eau contenant du phosphore et du calcium, caractérisé en ce que l'engrais complexe solide comprend un mélange physique
de 5 à 95 % en poids de phosphate d'urée en tant que principale source de phosphore et
de 5 à 95 % en poids d'un sel simple de calcium,
et la solution de réserve obtenue en dissolvant l'engrais dans de l'eau est exempte de précipité.

2. Engrais complexe solide selon la revendication 1, comprenant en plus au moins un sel de métal-trace de micronutriment non chélaté.

3. Engrais complexe solide selon la revendication 2, dans lequel le sel de métal-trace non chélaté est présent en une proportion allant jusqu'à 50 % en poids de l'engrais complexe total.

4. Engrais complexe solide selon l'une quelconque des revendications précédentes, comprenant
5 à 94 % en poids de phosphate d'urée,
5 à 94 % en poids de nitrate de calcium, et
0,1 % à 50 % en poids de sel de métal-trace de micronutriment non chélaté.

5. Engrais complexe solide selon la revendication 2, 3, 4, dans lequel le sel de métal-trace de micronutriment non chélaté comprend un sulfate ou nitrate de fer, de cuivre, de manganèse ou de zinc.

6. Engrais complexe solide selon la revendication 4 ou 5, comprenant en plus du nitrate de magnésium.

7. Concentré d'engrais à base d'eau exempt de précipité, comprenant l'engrais complexe solide selon l'une quelconque des revendications précédentes, dissous dans de l'eau.

8. Concentré d'engrais à base d'eau exempt de précipité selon la revendication 7, dans lequel l'engrais complexe solide représente d'environ 2 à environ 40 % en poids de la solution.

9. Concentré d'engrais à base d'eau exempt de précipité selon la revendication 8, dans lequel l'engrais complexe solide représente d'environ 5 % à environ 35 % en poids de la solution.

10. Procédé pour préparer un engrais complexe solide à dissoudre dans de l'eau pour donner une solution de réserve à base d'eau contenant du phosphore et du calcium, caractérisé en ce qu'il comprend le mélange physique
de 5 à 95 % en poids de phosphate d'urée en tant que principale source de phosphore et
de 5 à 95 % en poids d'un sel simple de calcium,
et en ce que la solution de réserve obtenue en dissolvant l'engrais dans de l'eau est exempte de précipité.
